(19) Europäisches Patentamt
European Patent Office
Office européen des brevets

(11) **EP 1 067 801 B1**

(12) **EUROPEAN PATENT SPECIFICATION**

(45) Date of publication and mention
of the grant of the patent:
**15.03.2006 Bulletin 2006/11**

(51) Int Cl.:
*H04N 7/50* (2006.01)          *H04N 7/26* (2006.01)
*G06T 5/00* (2006.01)

(21) Application number: **00305363.4**

(22) Date of filing: **26.06.2000**

(54) **Edge detecting and image encoding method and apparatus**

Verfahren und Vorrichtung zur Kantendetektion und Bildkodierung

Méthode et dispositif pour la détéction de contours et le codage d'images

(84) Designated Contracting States:
**DE FR GB**

(30) Priority: **28.06.1999 JP 18205899**

(43) Date of publication of application:
**10.01.2001 Bulletin 2001/02**

(73) Proprietor: **Pioneer Corporation**
**Tokyo-to (JP)**

(72) Inventor: **Takahashi, Tsutomu,**
**c/o Pioneer Corporation**
**Tsurugashima-shi,**
**Saitama-ken (JP)**

(74) Representative: **Haley, Stephen**
**Gill Jennings & Every LLP**
**Broadgate House**
**7 Eldon Street**
**London EC2M 7LH (GB)**

(56) References cited:
**EP-A- 0 380 090          US-A- 5 073 958**

• **ZHAOXIA WU ET AL: "Edge detection algorithms applied to quantitative analysis of X-ray image of osteoma" ENGINEERING IN MEDICINE AND BIOLOGY SOCIETY, 1998. PROCEEDINGS OF THE 20TH ANNUAL INTERNATIONAL CONFERENCE OF THE IEEE HONG KONG, CHINA 29 OCT.-1 NOV. 1998, PISCATAWAY, NJ, USA,IEEE, US, 29 October 1998 (1998-10-29), pages 728-729, XP010320611 ISBN: 0-7803-5164-9**

• **ZHIGANG FAN: "TEXTURED IMAGE SEGMENTATION - AN ADAPTIVE EDGE DETECTION APPROACH" PROCEEDINGS OF THE ASILOMAR CONFERENCE ON SIGNALS, SYSTEMS AND COMPUTERS. PACIFIC GROVE, OCT. 31 - NOV. 2, 1988. TWO VOLUMES BOUND AS ONE, NEW YORK, IEEE, US, vol. VOLS. 1 & 2 CONF. 22, 31 October 1988 (1988-10-31), pages 300-304, XP000130268**

• **GONG W ET AL: "Image coding using self-supervised backpropagation neural network" SIGNALS, SYSTEMS AND COMPUTERS, 1991. 1991 CONFERENCE RECORD OF THE TWENTY-FIFTH ASILOMAR CONFERENCE ON PACIFIC GROVE, CA, USA 4-6 NOV. 1991, LOS ALAMITOS, CA, USA,IEEE COMPUT. SOC, US, 4 November 1991 (1991-11-04), pages 1146-1150, XP010026479 ISBN: 0-8186-2470-1**

• **VAN DER ZWET P.N.J.; KONING G.; REIBER J.H.C.: 'Left ventricular contour detection: a fully automated approach' COMPUTERS IN CARDIOLOGY 1992 11 October 1992, LOS ALAMITOS, CA, USA, IEEE COMPUT. SOC. PRESS, USA, pages 359 - 362, XP010032065**

• **TIAN-HU YI: 'A Fuzzy Logic-Based Predictor for Predictive Coding of Images' IEEE TRANSACTIONS ON FUZZY SYSTEMS vol. 6, no. 1, February 1998, IEEE, NY, US, pages 153 - 161**

• **OH-JIN KWON; CHELLAPPA R.: 'Region based subband image coding scheme' PROCEEDINGS OF THE INTERNATIONAL CONFERENCE ON IMAGE PROCESSING (ICIP), AUSTIN, NOV. 13 - 16, 1994, LOS ALAMITOS, IEEE COMP. SOC. PRESS, US**

- VAN DYCK R.E.; MOAYERI N.; MARSHALL T.G. JR; CHIN M.: 'Video coding using entropy-constrained trellis coded quantization' PROC. OF THE XVII CONFERENCE ON APPLICATIONS OF DIGITAL IMAGE PROCESSING, SAN DIEGO, CA, USA, 26-29 JULY 1994, SPIE, THE INTERNATIONAL SOCIETY FOR OPTICAL ENGINEERING, USA, pages 119 - 130
- SULTAN A.; LATCHMAN H.A.: 'Adaptive quantization scheme for MPEG video coders based on HVS (human visual system)' PROC. OF THE CONFERENCE ON DIGITAL VIDEO COMPRESSION: ALGORITHMS AND TECHNOLOGIES, SAN JOSE, CA, USA, 31 JAN.-2 FEB. 1996, SPIE - THE INTERNATIONAL SOCIETY FOR OPTICAL ENGINEERING, USA, pages 181 - 188, XP008005010
- OSBERGER W.; HAMMOND S.; BERGMANN N.: 'An MPEG encoder incorporating perceptually based quantisation' PROCEEDINGS OF IEEE TENCON 97. IEEE REGION 10 ANNUAL CONFERENCE. SPEECH AND IMAGE TECHNOLOGIES FOR COMPUTING AND TELECOMMUNICATIONS (CAT. NO.97CH36162), BRISBANE, QLD., AUSTRALIA, 2-4 DEC. 1997, IEEE, NEW YORK, NY, USA, pages 731 - 734, XP010264328

**Description**

The present invention generally relates to an image encoding apparatus having an edge detecting apparatus. More particularly, the present invention relates to an image encoding method and apparatus with method and apparatus for detecting a edge, which is a boundary line between (i) one image constitutional object included in an image and constituting the image (i.e., a displayed object displayed within the picture plane as one portion of the image) and (ii) another image constitutional object adjacent to the one image constitutional object within the image.

If the edge of the above mentioned image constitutional object is displayed clearly, the distinction or visibility property of the whole image is improved, so that the whole image looks beautiful.

Therefore, in case of encoding the image with a high efficiency and recording it onto an optical disc or the like and further reproducing it, in order to reproduce and display the edge clearly, it is required to encoding the edge portion of the image more accurately by making the encoding amount for encoding the edge portion greaterthan that for encoding another portion.

In response to this, for example, in case of expressing the image, which has been compressed and recorded and is further reproduced, or expressing the non-compressed image itself at the time of encoding it, how to improve the image quality and display it visually beautiful is considered significant, so that it is considered the better as the detection accuracy for the edge is the higher.

More concretely, in a technique disclosed by Japanese Patent Publication No. Hei. 7-14211, for example, the edge detection is performed by threshold-judging an absolute value of a difference between each pair among four pixels adjacent to each other in a longitudinal or latitudinal direction. On the other hand, in a technique disclosed by Japanese Patent Application Laid Open Publication No. Hei.5-227431, the edge detection is performed by differential-processing the luminance value of each pixel within a pixel block of 3 pixels x 3 pixels (i.e., a so-called window).

In this manner, in case of judging the presence or absence of the edge, the judging process is performed for each pixel with respect to all the pixels constituting the image so as to improve the detection accuracy thereof.

However, as the presence or absence of the edge for each pixel with respect all the pixels is judged in this manner, the processing amount for the judgment becomes enormous. Thus, there may be a case in which an unnecessary time duration is required for the recording process and the reproducing process on the whole since an over-burden is applied to the processing apparatus for the judgment, which is a problem.

For example, in case of compressing and recording the dynamic image and further reproducing it, the time duration required for the recording process and the reproducing process on the whole is prolonged, which is a problem.

EP-A-0380090 discloses an edge detecting method and apparatus.

"An MPEG encoder incorporating the perceptually based on quantization" proceedings of IEEE Ten Con 1997, Speech and Image Technologies for Computing and Telecommunications, 2-4 December 1997, pages 731 to 734 discloses an imaging encoding apparatus with an edge detector and which encodes components of the image at a quantatization level dependent upon whether the image is one of a smooth, textured or edge region. US-A-5073958 discloses an edge detection method which employs a luminance threshold comparison against signals generated from scanning across the image in plural directions. "Left ventricular contour detection", Proceedings of Computers in Cardiology. 1992, USA 11-14 October 1992. pages 359 to 362 (IEEE Computer Society Press) discloses an automated image recognition method employing a neural network and pyramidal segmentation approach.

It is therefore an object of the present invention to provide an image according apparatus and method with an edge detecting apparatus and an edge detecting method, which can detect an edge easily within a relatively short time duration while maintaining a reasonable accuracy, and an image encoding apparatus having such an edge detecting apparatus.

The above object of the present invention can be achieved by an image encoding apparatus wherein said image encoding apparatus comprises:

an edge detecting apparatus for detecting an edge, which is a boundary between one image constitutional object, which is included in an image and constitutes the image, and another image constitutional object adjacent to the one image constitutional object within the image, and on the basis of a presence or absence of which within a pixel block comprising a plurality of pixels constituting the image, said edge detecting apparatus comprising:

a scanning device for scanning the pixels within one pixel block along a plurality of scanning lines whose directions are different from each other;
a detecting device for detecting a presence or absence of a change of luminance values for the pixels between two pixels adjacent to each other on the scanning line;
a generating device for generating an edge detection signal when the change of luminance values for the scanned pixels is present on one of the scanning lines;
an indicating device for indicating a pixel block, which has the pixel including an edge detection signal, and also including an edge detection signal for the pixel block;
a surrounding detection device for detecting whether or not an edge detection signal is included in all other adjacent pixel blocks to the one pixel block which includes an edge detection signal;
a re-evaluating device for re-evaluating a pixel block to indicate that it includes no edge detection signal, when edge detection signals are included in all other adjacent pixel blocks to the respective pixel block including an edge detection signal and
an encoding device for encoding a greater amount of image information concerning pixel blocks including edge detection signal than that of image information concerning other pixel blocks including no edge detection signal.

According to the apparatus of the present invention, since the change is detected as for only the pixels on the scanning line to thereby detect the presence or absence of the edge, it is possible to detect the presence or absence of the edge by a relatively simple process while keeping a minimally required accuracy as compared with the case of detecting the change as for all the pixels to thereby detect the presence or absence of the edge.

Therefore, it is possible to simplify the edge detecting process as a pre-process for the image encoding process while keeping the minimally required accuracy and increase the speed of the encoding process on the whole.

Since the change between the pixels is detected by the change of the luminance values between the pixels adjacent to each other, it is possible to detect the presence or absence of the edge accurately,

Since the change of the pixels is detected by scanning in the directions of two diagonal lines within the rectangular pixel block to thereby detect the edge, it is possible to detect the presence or absence of the edge for each pixel block by a relatively simple process while keeping the accuracy.

Since the change of the pixels is detected by scanning in the directions of two diagonal lines within the rectangular pixel block and the directions parallel to the respective sides passing through the center of the pixel block to thereby detect the edge, it is possible to detect the presence or absence of the edge for each pixel block by a relatively simple process while keeping the accuracy.

In the apparatus of the present invention, the image may be displayed by an interlace method, and the pixel block is set for each field image of the interlace method.

According to this aspect, since the pixel block is set for each field image of the interlace method and the presence or absence of the edge is detected for each pixel block, it is possible to accurately detect the edge even if a fast mobile image constitutional object is included in the image.

According to the image encoding apparatus of the present invention, since the edge is detected by a relatively simple process while keeping the accuracy, it is possible to encode the image while decreasing the processing time duration.

In the image encoding apparatus of the present invention, the encoding device compression-encodes the image while assigning an encoding amount for each pixel block on the basis of the edge detection signal.

According to this aspect, it is possible to compression-encode the image while improving the encoding efficiency.

The above object of the present invention can be also achieved by a method of encoding an image, said method comprising the steps of :

detecting an edge, which is a boundary between one image constitutional object, which is included in an image and constitutes the image, and another image constitutional object adjacent to the one image constitutional object within the image, and on the basis of a presence or absence of which within a pixel block comprising a plurality of pixels constituting the image, said step of detecting an edge comprising;
scanning the pixels within one pixel block along a plurality of scanning lines whose directions are different from each other,
detecting a presence or absence of a change of luminance values for the pixels between two pixels adjacent to each other on the scanning line;
generating an edge detection signal when the change of luminance values for the pixels which are scanned is present on one of the scanning lines;
indicating that a pixel block, which has the pixel including an edge detection signal, includes an edge detection signal;
detecting whether or not an edge detection signal is included in all other adjacent pixel blocks surrounding the one pixel block which includes an edge detection signal;
re-evaluating a one pixel block to indicate that it includes no edge detection signal, when edge detection signals are included in all other adjacent pixel blocks to the respective pixel block; and
encoding a greater amount of image information concerning pixel blocks including and edge detection signal than that of image information concerning other pixel blocks which include no edge detection signal.

According to the edge detecting method of the present invention, since the change is detected as for only the pixels on the scanning line to thereby detect the presence or absence of the edge, it is possible to detect the presence or absence of the edge by a relatively simple process while keeping a minimally required accuracy as compared with the case of detecting the change as for all the pixels to thereby detect the presence or absence of the edge.

Therefore, it is possible to simplify the edge detecting process as a pre-process for the image encoding process while keeping the minimally required accuracy and increase the speed of the encoding process on the whole.

In the edge detecting method of the present invention, the image may be displayed by an interlace method, and the pixel block is set for each field image of the interface method.

The nature, utility, and further features of this invention will be more clearly apparent from the following detailed description with respect to preferred embodiments of the invention when read in conjunction with the accompanying drawings briefly described below.

Fig. 1 is a block diagram of an image encoding apparatus as a first embodiment of the present invention;
Fig. 2 is a block diagram of an edge detecting unit in the image encoding apparatus of Fig. 1;
Fig. 3 is a flow chart showing an edge detecting process in the first embodiment;
Fig. 4 is a diagram showing an edge detecting process in the first embodiment;
Fig. 5 is a diagram showing a principle of an edge detecting process in a second embodiment of the present invention;
Fig. 6 is a diagram showing the edge detecting process in the second embodiment;
Fig. 7 is a diagram showing an edge detecting process in a third embodiment of the present invention; and
FIG. 8 is a block diagram of an image encoding apparatus as a modified embodiment of the present invention.

Referring to the accompanying drawings, embodiments of the present invention will be now explained. In the following embodiments, the present invention is applied to an image encoding apparatus for encoding a dynamic image with image-compressing the dynamic image on the basis of the MPEG (Moving Picture Experts Group) method.

(I) Principle of Present Invention

First of all, the principle of the present invention is explained before explaining actual embodiments.

The MPEG method is one kind of encoding processes using the DCT (Discrete Cosine Transform) method, and is recently treated as an international standard of the high-efficiency encoding (compressing) method for an image (including a dynamic image and a still image).

Here, according to the compression-encoding of the image by the MPEG method, an original image to be compression-encoded is divided into each block, which is called as a macro block as a pixel block (which includes 16 pixels $\times$ 16 pixels constituting the original image), and applies processes such as a moving compensating process, the DCT process, the binary-coding process and the like, onto each macro block.

Then, the detection of the edge within the image is intended to allow compression-encoding the original image, by applying the edge detecting process as a preprocessing with respect to the original image before compressing it by the MPEG method, so as to assign the encoding amount appropriately when compressing the detected edge, and so as not to reduce a distortion at the edge.

Here, as mentioned above, in the compression-encoding process for the image by using the MPEG method, since the compression-encoding is performed by the unit of macro block, it is enough to perform the detection of the presence or absence of the edge in the original image by the unit of macro block. Accordingly, an accuracy required when the presence or absence of the edge is detected for each pixel as in the prior arts, is not required in the present invention.

At this time, even in a case of performing the edge detection by the unit of macro block, it is possible to detect the edge by detecting the difference in the luminance between the adjacent pixels or performing the differential process with respect to all the pixels within the macro block, as in the prior arts. However, the redundancy becomes large as the detection is performed by the unit of macro block which is as large as 16 pixels $\times$ 16 pixels, resulting in the long processing time duration. On the contrary, it is experimentally confirmed that the improvement of the image quality in proportion to the spent processing time duration cannot be obtained

Accordingly, as explained below, in the present invention, when detecting the presence or absence of the edge within the macro block by the unit of macro block, by scanning within the macro block only in the direction which is predetermined and by recognizing that the edge exists within the macro block including a scanning line if the edge is detected on the scanning line to thereby performing the post encoding process, the speed-up of the compression-encoding process on the whole can be promoted by the simplification of the processes.

(II) First Embodiment

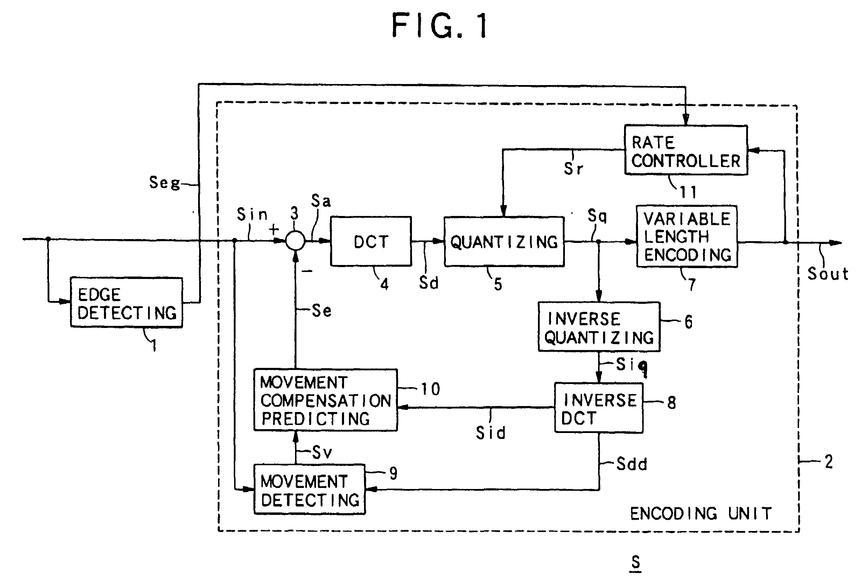

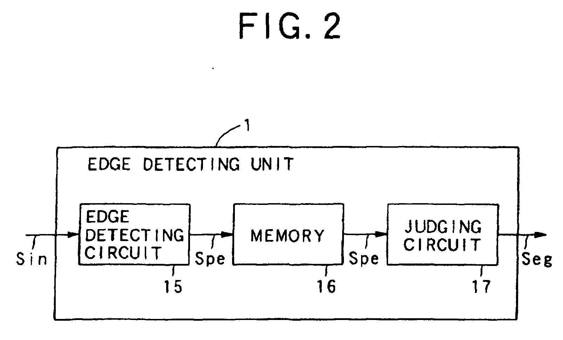

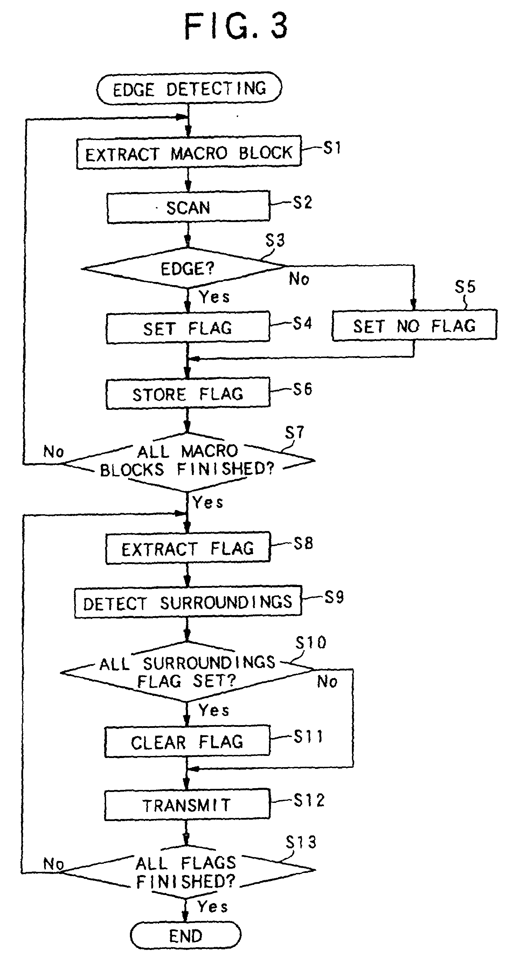

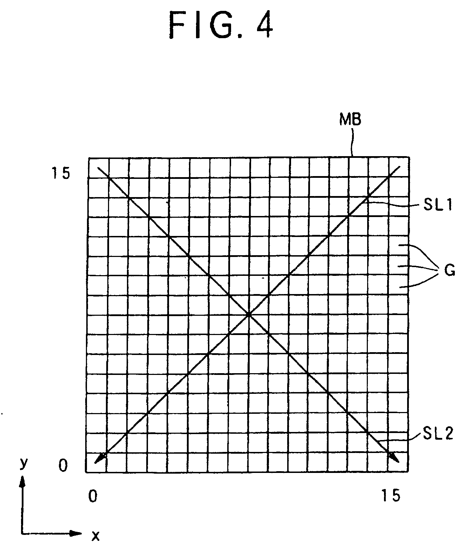

Next, a first embodiment of the present invention based on the above mentioned principle is explained with referring to FIG. 1 to FIG. 4. Here, FIG. 1 is a block diagram showing a schematic construction of the image encoding apparatus as the first embodiment, FIG. 2 is a block diagram showing a detailed construction of an edge detecting unit of the present invention, FIG. 3 is a flow chart showing the edge detecting process of the present invention, and FIG. 4 is a diagram explaining the idea of the edge detecting process of the present invention,

At first, a whole construction and a whole operation of the image encoding apparatus as the first embodiment is explained with referring to FIG. 1.

As shown in FIG. 1, an image encoding apparatus S as a first embodiment is provided with: an edge detecting unit 1 for detecting a presence or absence of the edge for each macro block in an original image, which is inputted as an input signal Sin, by a later described action of the present invention, generating an edge detection signal Seg and outputting it to a rate controller 11; and an encoding unit 2 for actually performing a compression-encoding of the original image by using the edge detection signal Seg.

The encoding unit 2 is provided with: an adder 3, a DCT (Discrete Cosine Transform) unit 4, a quantizing unit 5, an inverse quantizing unit 6, a variable length encoding unit 7, an inverse DCT unit 8, a movement detecting unit 9, a movement compensation predicting unit 10 and the rate controller 11.

Next, the operation is explained.

The edge detecting unit 1 detects the presence or absence of the edge for each macro block, as for a plurality of original images included in the input signal Sin (each of which is included in the input signal Sin as a frame image which is digitized for each pixel, and is already divided into each macro block of 16 pixels $\times$ 16 pixels at the stage of the input signal Sin), which is inputted from an external portion to the image encoding apparatus S, generates the edge detection signal Seg and outputs it to the rate controller 11 for each macro block.

On the other hand, the input signal Sin is also inputted to the movement detecting unit 9 and the adder 3 as well as the edge detecting unit 1.

Then, in the movement detecting unit 9, the vector indicating the movement of the image is calculated for each macro block by a known technique on the basis of a reconstruction signal Sdd described later as for each frame image within the input signal Sin, and a corresponding vector signal Sv is outputted to the movement compensation predicting unit 10.

On the other hand, the adder 3 subtracts from the input signal Sin, a compensation signal Se, which is outputted from the movement compensation predicting unit 10, and the result of this subtraction is outputted to the DCT unit 4 as a subtraction signal Sa.

Next, the DCT unit 4 applies a DCT process, which is to compress the information amount by a known technique, onto the subtraction signal Sa, and outputs the result of this DCT process as a conversion signal Sd to the quantizing unit 5.

Then, the quantizing unit 5 quantizes the conversion signal Sa so as to harmonize it with the bit rate, which is indicated by a rate signal Sr described layer, generates a quantization signal Sq and outputs it to the variable length encoding unit 7 and the inverse quantizing unit 6.

Next, the inverse quantizing unit 6 applies an inverse quantizing process onto the quantization signal Sq, generates an inverse quantization signal Siq and outputs it to the inverse DCT unit 8.

Then, the inverse DCT unit 8 applies an inverse DCT process (i.e., an inverse Discrete Cosine Transform process) onto the inverse quantization signal Siq by a known technique, generates an inverse conversion signal Sid and outputs it to the movement compensation predicting unit 10. Further, the inverse DCT unit 8 generates the reconstruction signal Sdd including a reconstructed image and outputs it to the movement detecting unit 9.

After that, the movement compensation predicting unit 10 performs a movement compensating process using a so-called intraframe prediction in the MPEG method, on the basis of the movement vector included in the vector signal Sv and the inverse conversion signal Sid, generates the compensation signal Se to compress the information amount and outputs it to the adder 3.

On the other hand, the variable length encoding unit 7 applies a variable length encoding process onto the quantization signal Sq, generates an output signal Sout, which is a signal obtained by compression-encoding the original input signal Sin by the MPEG method, and outputs it to the rate controller 11 and the external portion.

At this time, the rate controller 11 generates the rate signal Sr to optimize the bit rate at the time of quantization in the quantizing unit 5 on the basis of the output signal Sout and outputs it to the quantizing unit 5. At this time, the rate controller 11 generates the rate signal Sr such that the more information amount at the time of quantization is assigned to one macro block including an edge than another macro block including no edge, on the basis of the edge detection signal Seg.

Next, a detailed construction and an operation of the edge detecting unit 1 is explained with referring to FIG. 2 to FIG. 4.

At first, the construction of the edge detecting unit 1 is explained with referring to FIG. 2.

A shown in FIG. 2, the edge detecting unit 1 is provided with: an edge detecting circuit 15 for detecting a presence or absence of an edge for each macro block with respect to each original image included in the input signal Sin, generating a flag signal Spe including a flag indicating the presence or absence, and outputting it to a memory 16; the memory 16 for temporarily storing the generated flag signal Spe separately for each macro block; and a judging circuit 17 for re-evaluating as described later the content of the flag signal Spe stored in correspondence with each macro block by the relationship between the flag corresponding to one macro block and the flag corresponding to another macro block, which exists in the surroundings of the one macro block, finally generating the edge detection signal Seg indicating the presence or absence of the edge for each macro block and outputting it to the rate controller 11.

Next, a detailed operation of each constitutional element is described with referring to FIG. 3 and FIG. 4. In the flow chart shown in FIG. 3, the processes from a step S1 to a step S5 and a step S7 are respectively performed in the edge detecting circuit 15. The process at a step S6 is performed in the memory 16. The processes from a step S8 to a step S13 are performed in the judging circuit 17.

As shown in FIG. 3, in the edge detecting unit 1, at first, when the original image is inputted as the input signal Sin, the edge detecting circuit 15 extracts one macro block included in the original image (step S1), and scans within the extracted macro block as for the presence or absence of the edge within the extracted macro block (step S2).

Here, the scan at the step S2 is performed as following. Namely, as shown in FIG. 4, pixels G on scanning lines SL1 and SL2, which constitute diagonal lines of one macro block MB. The luminance values of respective pixels G adjacent to each other on the scanning lines SL1 and SL2 are compared with each other and the absolute value of the difference therebetween are respectively detected. Those scanning, comparing and detecting processes are performed for each macro block MB.

Namely, assuming that the absolute value of the difference of the luminance values between the pixels G adjacent to each other is "d", the luminance value of the pixel G at a position (x, y) within the macro block MB is "p" (refer to FIG. 4) and an integer number from "0" to "14" is "x", the absolute value d is sequentially detected as following and is temporarily stored in the memory not shown within the edge detecting circuit 15.

$$d(x, x) = \mid p(x+1, x+1) - p(x, x) \mid$$

$$\text{(corresponding to the scanning line SL1)}$$

$$d(14 - x, x) = \mid p(15 - x - 1, x+1) - p(15 - x, x) \mid$$

$$\text{(corresponding to the scanning line SL2)}$$

Next, when the scanning in the two directions as for one macro block MB is completed and the respective absolute values d are accumulated, it is judged whether or not there exists an absolute value d among the accumulated absolute values d, which exceeds a threshold value Th, which is predetermined as a threshold value for the absolute value d indicating the edge (step S3). If no absolute value d exceeds the threshold value Th (step S3: NO), it is judged that there is no edge in the corresponding macro block MB, a flag indicating the existence of the edge is not set (step S5), and the flag signal Spe including no flag is generated. Then, the process flow proceeds to a step S6. On the other hand, if there is one or more absolute value d among the accumulated absolute values d which exceeds the threshold Th (step S3: YES), the flag indicating the existence of the edge within the corresponding macro block MB is set (step S4), and the flag signal Spe including the set flag is generated. Then, the generated flag signal Spe is temporarily stored in the memory 16 (step S6).

When the temporary storage of the flag signal Spe (including one of the flag indicating the existence of the edge and the flag indicating the absence of the edge within the macro block MB) as for one macro block MB is finished, it is judged whether or not the edge detecting processes as for all the macro blocks MB within the original image is finished so as to perform the operations from the step S1 to the step S6 for the next macro block MB within the original image (step S7). If the processes are finished (step S7: YES), the operational flow proceeds to a next step S8. If the processes are not finished (step S7: NO), the operational flow returns to the step S1, so as to extract the next macro block MB and repeats the above mentioned processes from the step S2 to the step S7 with respect to the extracted macro block MB.

By the above mentioned processes from the step S1 to the step S7, the flag signals Spe each indicating the presence or absence of the edge as for all the macro blocks MB constituting one original image are stored into the memory 16 for each macro block MB.

When the accumulation of the flag signals Spe by the above mentioned one series of operations for one original image is finished, one flag signal Spe which has the set value (refer to the step S4) is extracted (hereinbelow, the value of the flag included in each flag signal Spe is simply referred to as the value of the flag signal Spe) by the judging circuit 17 from among the flag signals Spe accumulated for each macro block (step S8). Further, the values of the flag signals Spe corresponding to 8 macro blocks MB surrounding the one macro block MB, as for which the existence of the edge is indicated by the value of the extracted flag signal Spe within the original image, are detected (step S9).

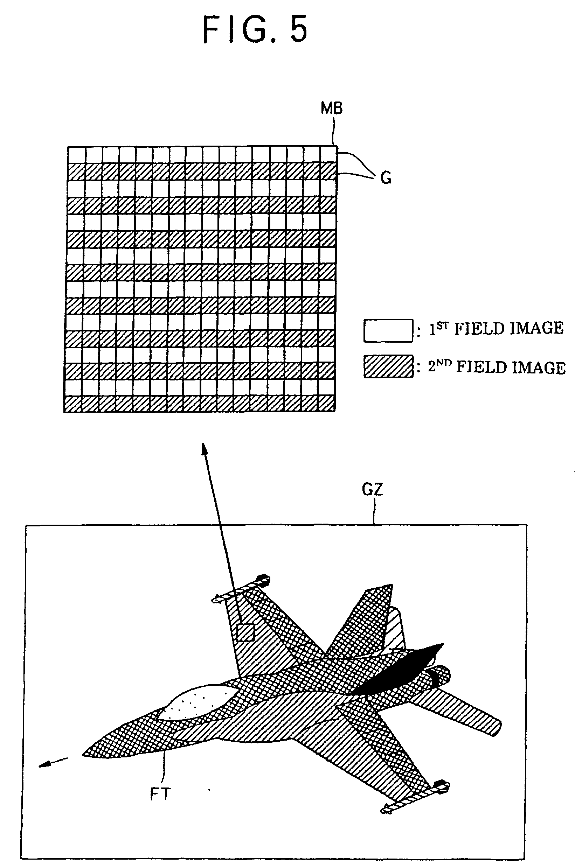

Then, it is checked whether or not each of all the values of the detected 8 flag signals Spe is the value indicating that the flag is set (step S10). If even one of them surrounding the one macro block MB is not the value indicating that the flag is set (i.e., the edge is not included (refer to FIG. 5)) (step S10: NO), the operational flow proceeds to a step S12 while unchanging the value of the flag signal Spe extracted at the step S8. Then, the flag signals Spe are transmitted to the rate controller 11 for each macro block MB respectively as the edge signal Seg (step S12).

On the other hand, according to the judgment at the step S10, if each of all the detected values of the flag signals Spe is the value indicating that the flag is set (Step S10: YES), the values of the flag signals Spe extracted at the step S8 are initialized to the values when the flag is not set (step S11). Then, the flag signals Spe having the initialized values of the flags are transmitted to the rate controller 11 for each macro block MB respectively as the edge signal Seg (step S12).

After that, the above mentioned rate signal Sr is generated so as to assign the encoding amount greater when compression-encoding the macro block including the edge, by the rate controller 11 as mentioned before.

Next, it is judged whether or not the processes for all the stored flag signals Spe having the set values are finished so as to perform the processes from the step S8 to the step S12 as for all the flag signals having the set values within the flag signals Spe (step S13). If the processes are finished (step S13: YES), the edge detecting process is finished as it is. If the processes are not finished (step S13: NO), the operational flow returns to the step S8, so that next flag signal Spe having the set value is extracted. Then, the above mentioned processes from the step S8 to the step S13 are repeated with respect to the extracted flag signal Spe.

Here, the above mentioned processes from the step S8 to the step S13 are to prevent the more encoding amount from being assigned to all the macro blocks MB within a specific area in the original image in case that all the macro blocks within the specific area include the edges (e.g., in case that the original image is such an image that fully crowded audiences in a baseball stadium are taken within this specific area, for example) since the existences of the edges are detected in all the macro blocks within this specific area. It is experimentally confirmed that the image quality after the image compression is not affected so much even if this specific area is assumed to be the area having no edge as a whole of the specific area. Thus, the processes from the step S8 to the step S13 are to thereby assign the more encoding amount to the macro block MB having the essentially necessary edge and perform encoding.

As explained above, according to the operation of the edge detecting unit 1 in the first embodiment, the change is detected as for the pixels G on the scanning lines SL1 and SL2 within the macro block MB and thereby the presence or absence of the edge is detected. Thus, as compared with the case of detecting the change as for all the pixels G and thereby detecting the presence or absence of the edge, it is possible to detect the presence or absence of the edge by using a relatively simple process while keeping the minimally required accuracy.

Therefore, since the edge is detected by the relatively simple process while keeping the minimally required accuracy, it is possible to decrease the processing time duration and compression-encode the image.

Since the change between the pixels G is detected by the change in the luminance value between the pixels G adjacent to each other on the scanning lines SL1 and SL2, the presence or absence of the edge can be accurately detected.

Further, since the edge is detected by scanning in the two diagonal directions within the macro block MB which has a rectangular shape to thereby detect the change between the pixels G and detect the edge, it is possible to detect the presence or absence of the edge for each macro block MB by a relatively simple process while keeping the accuracy.

Furthermore, when all the macro blocks MB surrounding the one macro block MB, which is detected as having the edge, are detected as having the edges respectively, the edge detection signal Seg indicating the absence of the edge in place of the edge detection signal indicating the existence of the edge is generated for the one macro block MB. Thus, even if it is judged that the edge is included in the macro block MB within the image constitutional object, for which it is not appropriate to judge that the edge exists, the detection of the edge is cancelled to thereby generate the edge detection signal Seg indicating the absence of the edge. Therefore, it is possible to more appropriately detect the presence or absence of the edge.

(III) Second Embodiment

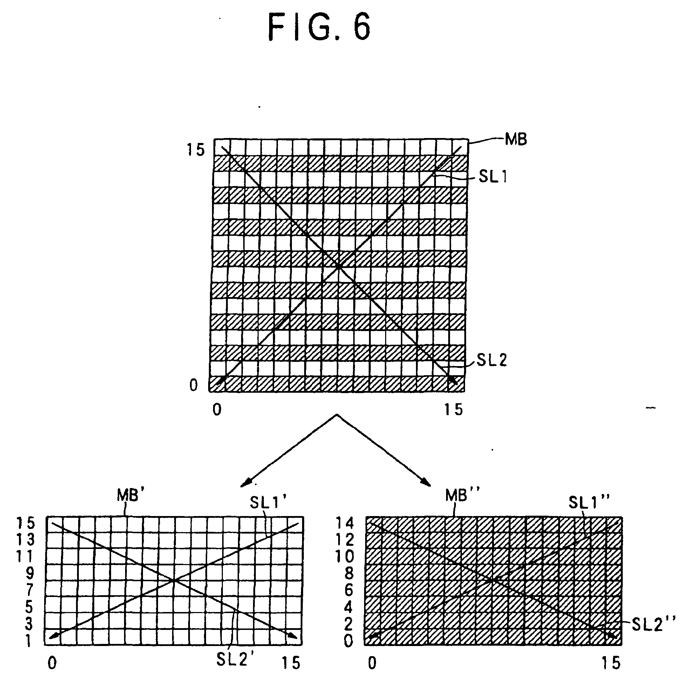

Next, a second embodiment of the present invention is described with referring to FIG. 5 and FIG. 6. FIG. 5 and FIG. 6 are diagrams showing the concept of the edge detection in the second embodiment.

In the above described first embodiment, scanning is performed on the diagonal lines within the macro block MB regardless of the content of the image constitutional object (e.g., a baseball stadium and a player included therein in case of the original image of a baseball stadium, a sky and an airplane in case of the image in which the airplane is flying in the sky as a background) included in the original image (refer to FIG. 3, the step S2). In contrast to this, the scanning for the pixels is performed in a different manner if the original image is a so-called interlace image having two field images according to the second embodiment.

Incidentally, the edge detecting processes other than the scanning process for the original image in the second embodiment are the same as those in the first embodiment. Thus, the detailed explanations thereof are omitted.

If an original image GZ is the interlace image and an image constitutional object FT included in the original image GZ is an airplane flying at a high speed, since the movement of the image constitutional object FT is very fast in the macro block MB included in the original image GZ right after the image constitutional object FT appears in the original image GZ, there may be a case that the sky as a background is included as the first field image although it is within one macro block MB as shown in FIG. 5, and that one portion of the image constitutional object GZ is included as the second field image.

In such a case, if the scanning lines SL1 and SL2 same as the first embodiment are set (refer to FIG. 6), it is judged that edges exist between all the pixels adjacent to each other on the scanning lines (refer to FIG. 3, steps S3 and S4). Then, if no process is performed in such a case, there may be a case that the edge is included in a macro block MB, in which the edge is not supposed to be essentially included.

At this time, according to the above mentioned MPEG method, one of the result of applying the DCT process onto the frame image and the result of applying the DCT process onto the field image is selected under a predetermined standard. In case of FIG. 5, if the result of applying the DCT process onto the frame image is selected, the image quality after compression is the better as the flag indicating the existence of the edge is set. If the result of applying the DCT process onto the field process, the image quality is the better as the flag is not set.

If the original image GZ is the interlace image and if the image constitutional object FT included in the original image GZ is an airplane flying fast, in the macro block MB included in the original image GZ right after the image constitutional object FT appears in the original image GZ, since the movement of the image constitutional object FT is fast, there may occur a case that the sky as the background is included as one field image and one portion of the image constitutional object FT is included in a second field image although it is within one macro block MB.

In such a case, if scanning is performed with setting the scanning lines SL1 and SL2 in the same manner as the first embodiment (refer to an upper portion of FIG. 6), it is judged that the edge exists between all the pixels, which are adjacent to each other on the scanning lines (refer to FIG. 3, the steps S3 and S4). Then, if no process is performed for such a case, there may occur a case that the edge is erroneously judged to be included in the macro block MB in which the edge is not supposed to be included essentially.

At this time, according to the MPEG method, either one of the result of applying the DCT process on the frame image or the result of applying the DCT process on the field image is selected by a predetermined standard. Thus, in such a case shown in FIG. 5, if the result of applying the DCT process on the frame image is selected, the image quality is improved after the compression when the flag indicating the edge is set. On the other hand, if the result of applying the DCT process on the field image is selected, the image quality is improved after the compression when the flag is not set.

Therefore in the edge detecting process in the second embodiment, as shown in the lower portion in FIG. 6, in the scanning operation within the macro block MB (refer to FIG. 3, the step S2), one macro block MB is divided into a first macro block MB' including only the first field image in the interlace image and a second macro block MB" including only the second field image in the interlace image, and the scanning lines SL1' and SL2' are set on the diagonal lines on the divided first macro block MB' and the scanning lines SL1" and SL2" are set on the diagonal lines on the divided macro block MB". By scanning on those scanning lines SL1', SL2', SL1" and SL2", the change in the luminance value is detected between the pixels G on the respective scanning lines SL1', SL2', SL1" and SL2".

Then, the second embodiment is constructed such that both of the flag signal Spe indicating the result of detecting the edge as for the macro blocks MB' and MB" and the flag signal Spe indicating the result of detecting the edge as for the macro block MB before dividing it are outputted to the rate controller 11.

In this manner, by performing the scanning operation not only as for the macro block MB included in the original image GZ but also as for the divided macro blocks MB' and MB" in case that the original image GZ is the interlace image, even if the image constitutional object FT moving so fast as to stride over two field images is included in the original image GZ, it is possible to detect the presence or absence of the edge for each macro block MB appropriately.

As explained above, according to the edge detecting process in the second embodiment, in addition to the advantage of the operation of the first embodiment, even if the image constitutional object FT moving fast is included in the original image GZ, it is possible to accurately detect the presence or absence of the edge since the macro blocks MB' and MB" are set for each field image in the interlace method and the presence or absence of the edge is performed for each of the blocks MB' and MB".

*(IV) Third Embodiment*

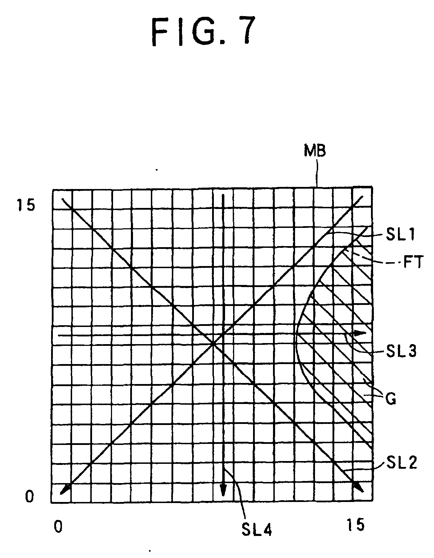

Next, a third embodiment of the present invention is described with referring to FIG. 7. FIG. 7 is a diagram showing the concept of the edge detection in the third embodiment. Incidentally, the edge detecting processes other than the scanning process for the original image in the third embodiment are the same as those in the first or second embodiment. Thus, the detailed explanations thereof are omitted.

In the above described first and second embodiments, scanning is performed on the scanning lines only in the two directions as for one macro block MB (refer to FIG. 3, the step S2). In contrast to this, the scanning for the pixels is performed within the macro block MB on scanning lines in four directions according to the third embodiment.

Namely, as shown in FIG. 7, in the scanning operation of the macro block MB in the third embodiment, in addition to the scanning lines SL1 and SL2 in the diagonal directions in the macro block MB shown in FIG. 4, scanning lines SL3 and SL4 passing through the center of the macro block MB and in parallel to the orthogonal two sides of the macro block MB to thereby perform scanning for the pixels G.

If the scanning is performed in the four directions in this manner, as compared with the case of the first or second embodiment, even in case that the image constitutional object FT exists within the macro block MB sandwiched between the scanning lines SL1 and SL2 in the two directions, it is possible to detect the existence of the edge of the image constitutional object FT without increasing the processing amount so much.

As described above, according to the edge detecting process in the third embodiment, in addition to the advantageous effect of the edge detecting process in the first or second embodiment, since the change of the pixels G is detected by scanning in the two directions of the diagonal lines within the rectangular macro block MB and in the two directions parallel to the two sides with passing through the center of the macro block MB, it is possible to detect the presence or absence of the edge for each macro block MB by a relatively simple process while keeping the accuracy high.

(V) Modified Embodiment

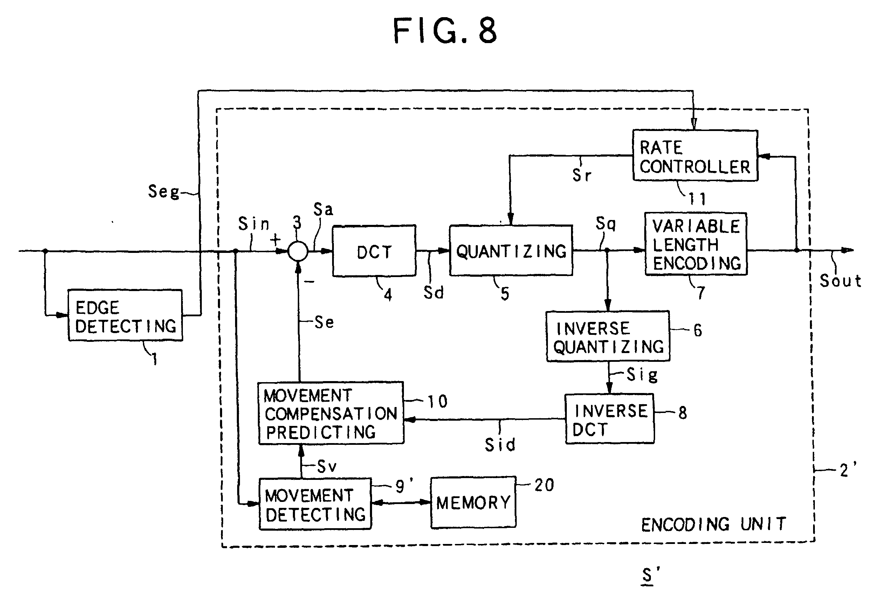

In the above described embodiments, a case has been explained in which the present invention is applied to the encoding unit 2, which uses the reconstructed image for the movement detection. Other than that, as shown in FIG. 8, it is possible to combine the edge detecting unit 1 of the present invention to an image encoding apparatus S' having a memory 20 for storing the original image in advance and an encoding unit 2' including a movement detecting unit 9', which performs the movement detection by using the original image within the input signal Sin and the original image outputted from the memory 29 and generates the vector signal Sv, in the same manner as the encoding unit 2 within the image encoding apparatus S.

**Claims**

1. An image encoding apparatus (S) wherein said image encoding apparatus comprises:

   an edge detecting apparatus (1) for detecting an edge, which is a boundary between (i) one image constitutional object, which is included in an image and constitutes the image, and (ii) another image constitutional object adjacent to the one image constitutional object within the image, and on the basis of a presence or absence of which within a pixel block comprising a plurality of pixels constituting the image, said edge detecting apparatus comprising:

   a scanning device (15) for scanning the pixels within one pixel block along a plurality of scanning lines whose directions are different from each other,
   a detecting device (15) for detecting a presence or absence of a change of luminance values for the pixels between two pixels adjacent to each other on the scanning line;
   a generating device (17) for generating an edge detection signal when the change of luminance values for the scanned pixels is present on one of the scanning lines;
   an indicating device for indicating a pixel block, which has the pixel including an edge detection signal, and also including an edge detection signal for the pixel block;
   a surrounding detection device (15) for detecting whether or not an edge detection signal is included in all other adjacent pixel blocks to the one pixel block which includes an edge detection signal;
   a re-evaluating device for re-evaluating a pixel block to indicate that it includes no edge detection signal, when edge detection signals are included in all other adjacent pixel blocks to the respective pixel block including an edge detection signal and
   an encoding device (2) for encoding a greater amount of image information concerning pixel blocks including edge detection signal than that of image information concerning other pixel blocks including no edge detection signal.

2. An image encoding apparatus (S) according to claim 1, wherein
   the detecting device (15) detects a presence or absence of a change of luminance values by reference to a predetermined value for the pixels between two pixels adjacent to each other on the scanning line; and
the generating device (17) generates an edge detection signal when the presence of the luminance change for the pixels which are scanned is detected on one of the scanning lines.

3. An image encoding apparatus (1) according to claim 1 or 2, wherein
the pixel block is rectangular, and
the scanning lines are angularly regular spaced scanning lines and have directions different from each other and pass-through a given single reference point inside the pixel block.

4. A method of encoding an image, said method comprising the steps of :

detecting an edge, which is a boundary between (i) one image constitutional object, which is included in an image and constitutes the image, and (ii) another image constitutional object adjacent to the one image constitutional object within the image, and on the basis of a presence or absence of which within a pixel block comprising a plurality of pixels constituting the image, said step of detecting an edge comprising:

scanning the pixels within one pixel block along a plurality of scanning lines whose directions are different from each other;
detecting a presence or absence of a change of luminance values for the pixels between two pixels adjacent to each other on the scanning line;
generating an edge detection signal when the change of luminance values for the pixels which are scanned is present on one of the scanning lines;
indicating that a pixel block, which has the pixel including an edge detection signal, includes an edge detection signal;
detecting whether or not an edge detection signal is included in all other adjacent pixel blocks surrounding the one pixel block which includes an edge detection signal;
re-evaluating a one pixel block to indicate that it includes no edge detection signal, when edge detection signals are included in all other adjacent pixel blocks to the respective pixel block,; and
encoding a greater amount of image information concerning pixel blocks including and edge detection signal than that of image information concerning other pixel blocks which include no edge detection signal.

### Revendications

1. Appareil de codage d'image (S) dans lequel ledit appareil de codage d'image comprend :

un appareil de détection de bord (1) pour détecter un bord, qui est une limite entre (i) un objet constitutionnel d'image, qui est compris dans une image et constitue l'image, et (ii) un autre objet constitutionnel d'image adjacent à l'objet constitutionnel d'image dans l'image, et sur la base d'une présence ou d'une absence de laquelle dans un bloc de pixels comprenant une pluralité de pixels constituant l'image, ledit appareil de détection de bord comprenant :

un dispositif de balayage (15) pour balayer les pixels dans un bloc de pixels le long d'une pluralité de lignes de balayage dont les directions sont différentes l'une de l'autre ;
un dispositif de détection (15) pour détecter une présence ou une absence d'une variation des valeurs de luminance pour le pixel entre deux pixels adjacents l'un à l'autre sur la ligne de balayage ;
un dispositif de génération (17) pour générer un signal de détection de bord lorsque la variation des valeurs de luminance des pixels balayés est présente sur une des lignes de balayage ;
un dispositif d'indication pour indiquer un bloc de pixels, qui a le pixel comprenant un signal de détection de bord, et comprenant aussi un signal de détection de bord pour le bloc de pixels ;
un dispositif de détection d'environnement (15) pour détecter si oui ou non un signal de détection de bord est compris dans tous les autres blocs de pixel adjacents au bloc de pixels qui comprend un signal de détection de bord ;
un dispositif de réévaluation pour réévaluer un bloc de pixels pour indiquer qu'il comprend aucun signal de détection de bord, lorsque des signaux de détection de bord sont compris dans tous les autres blocs de pixel adjacents au bloc de pixels respectif comprenant un signal de détection de bord et
un dispositif de codage (2) pour coder une quantité plus grande d'informations d'image concernant des blocs de pixel comprenant un signal de détection de bord que celui des informations d'image concernant les autres blocs de pixel comprenant aucun signal de détection de bord.

2. Appareil de codage d'image (S) selon la revendication 1, dans lequel :

le dispositif de détection (15) détecte une présence ou une absence d'une variation des valeurs de luminance en référence à une valeur prédéterminée pour les pixels entre deux pixels adjacents l'un à l'autre sur la ligne de balayage ; et
le dispositif de génération (17) génère un signal détection de bord lorsque la présence de la variation de luminance pour les pixels qui sont balayés est détectée sur une de lignes de balayage.

3. Appareil de codage d'image (1) selon la revendication 1 ou 2, dans lequel :

le bloc de pixels est rectangulaire, et
les lignes de balayage sont des lignes de balayage espacées régulières de façon angulaire et ont différentes directions l'une de l'autre et passent à travers un point de référence unique donné à l'intérieur du bloc de pixels.

4. Procédé de codage d'une image, ledit procédé comprenant les étapes de :

détection d'un bord, qui est une limite entre (i) un objet constitutionnel d'image, qui est compris dans une image et constitue l'image, et (ii) un autre objet constitutionnel d'image adjacent à l'objet constitutionnel d'image dans l'image, et sur la base d'une présence ou d'une absence dans un bloc de pixels comprenant une pluralité de pixels constituant l'image, ladite étape de détection d'un bord comprenant :

le balayage des pixels dans un bloc de pixels le long d'une pluralité de lignes de balayage dont les directions sont différentes l'une de l'autre ;
la détection d'une présence ou d'une absence d'une variation des valeurs de luminance pour les pixels entre deux pixels adjacents l'un à l'autre sur la ligne de balayage ;
la génération d'un signal de détection de bord lorsque la variation des valeurs de luminance pour les pixels qui sont balayés est présente sur une des lignes de balayage ;
l'indication qu'un bloc de pixels, qui a le pixel comprenant un signal de détection de bord, comprend un signal de détection de bord ;
la détection si oui ou non un signal de détection de bord est inclus dans tous les autres blocs de pixel adjacents entourant le bloc de pixels qui comprend un signal de détection de bord ;
la réévaluation d'un bloc de pixels pour indiquer qu'il ne comprend pas de signal de détection de bord, lorsque des signaux de détection de bord sont compris dans tous les autres blocs de pixel adjacents pour le bloc de pixels respectif ; et
le codage d'une quantité plus grande d'informations d'image concernant des blocs de pixel comprenant un signal de détection de bord que celui des informations d'image concernant d'autres blocs de pixel qui comprennent aucun signal de détection de bord.

**Patentansprüche**

1. Bildkodiervorrichtung (S), wobei die Bildkodiervorrichtung umfasst:

eine Kantenerfassungsvorrichtung (1), die eine Kante, die eine Grenze zwischen (a) einem Bildbestandteil-Objekt, das in einem Bild enthalten ist und Bestandteil des Bildes ist, und (b) einem anderen, zu dem einen Bildbestandteil-Objekt benachbarten Bildbestandteil-Objekt, ist, auf Basis eines Vorhandenseins oder Nichtvorhandenseins derselben in einem Pixelblock erfasst, der eine Vielzahl von Pixeln umfasst, die Bestandteil des Bildes sind, wobei die Kantenerfassungsvorrichtung umfasst:

eine Abtasteinrichtung (15), die die Pixel in einem Pixelblock entlang einer Vielzahl von Abtastzeilen abtastet, deren Richtungen sich voneinander unterscheiden;
eine Erfassungsvorrichtung (15), die ein Vorhandensein oder Nichtvorhandensein einer Änderung von Helligkeitswerten für die Pixel zwischen zwei Pixeln erfasst, die auf der Abtastzeile benachbart zueinander sind;
eine Erzeugungseinrichtung (17), die ein Kantenerfassungssignal erzeugt, wenn die Änderung von Helligkeitswerten für die abgetasteten Pixel auf einer der Abtastzeilen vorhanden ist;

eine Anzeigeeinrichtung, die einen Pixelblock anzeigt, der das Pixel hat, das ein Kantenerfassungssignal enthält, und auch ein Kantenerfassungssignal für den Pixelblock enthält;
eine Umgebungserfassungseinrichtung (15), die erfasst, ob ein Kantenerfassungssignal in allen anderen zu dem einen Pixelblock, der ein Kantenerfassungssignal enthält, benachbarten Pixelblöcken enthalten ist;
eine Neubewertungseinrichtung zum Neubewerten eines Pixelblocks, um anzuzeigen, dass er kein Kantenerfassungssignal enthält, wenn Kantenerfassungssignale in allen anderen zu dem entsprechenden Pixelblock, der ein Kantenerfassungssignal enthält, benachbarten Pixelblöcken enthalten sind, und
eine Kodiereinrichtung (2), die eine größere Menge an Bildinformationen, die Pixelblöcke betrifft, die Kantenerfassungssignale enthalten, als Bildinformationen kodiert, die andere Pixelblöcke betreffen, die kein Kantenerfassungssignal enthalten.

2. Bildkodiervorrichtung (S) nach Anspruch 1, wobei
die Erfassungseinrichtung (15) ein Vorhandensein oder Nichtvorhandensein einer Änderung von Helligkeitswerten unter Bezugnahme auf einen vorgegebenen Wert für die Pixel zwischen zwei Pixeln erfasst, die auf der Abtastzeile benachbart zueinander sind; und
die Erzeugungseinrichtung (17) ein Kantenerfassungssignal erzeugt, wenn das Vorhandensein der Helligkeitsänderung für die Pixel, die abgetastet werden, auf einer der Abtastzeile erfasst wird.

3. Bildkodiervorrichtung (1) nach Anspruch 1 oder 2, wobei
der Pixelblock rechteckig ist, und
die Abtastzeilen winklig gleichmäßig beabstandete Abtastzeilen sind, die voneinander verschiedene Richtungen haben und durch einen bestimmten einzelnen Bezugspunkt innerhalb des Pixelblocks verlaufen.

4. Verfahren zum Kodieren eines Bildes, wobei das Verfahren die folgenden Schritte umfasst:

Erfassen einer Kante, die eine Grenze zwischen (a) einem Bildbestandteil-Objekt, das in einem Bild enthalten ist und Bestandteil des Bildes ist, und (b) einem anderen, zu dem einen Bildbestandteil-Objekt benachbarten Bildbestandteil-Objekt, ist, auf Basis des Vorhandenseins oder Nichtvorhandenseins derselben in einem Pixelblock erfasst, der eine Vielzahl von Pixeln umfasst, die Bestandteil des Bildes sind, wobei der Schritt des Erfassens einer Kante umfässt:

Abtasten der Pixel in einem Pixelblock entlang einer Vielzahl von Abtastzeilen, deren Richtungen sich voneinander unterscheiden;
Erfassen eines Vorhandenseins oder Nichtvorhandenseins einer Änderung von Helligkeitswerten für die Pixel zwischen zwei Pixeln, die auf der Abtastzeile aneinandergrenzen;
Erzeugen eines Kantenerfassungssignals, wenn die Änderung von Helligkeitswerten für die Pixel, die abgetastet werden, auf einer der Abtastzeilen vorhanden ist;
Anzeigen, dass ein Pixelblock, der das Pixel hat, das ein Kantenerfassungssignal enthält, ein Kantenerfassungssignal enthält;
Erfassen, ob ein Kantenerfassungssignal in allen anderen benachbarten Pixelblöcken enthalten ist, die den einen Pixelblock umgeben, der ein Kantenerfassungssignal enthält;
Neubewerten eines Pixelblocks, um anzuzeigen, dass er kein Kantenerfassungssignal enthält, wenn Kantenerfassungssignale in allen anderen zu dem entsprechenden Pixelblock benachbarten Pixelblöcken enthalten sind; und
Kodieren einer größeren Menge an Bildinformationen, die Pixelblöcke betreffen, die ein Kantenerfassungssignal enthalten, als Bildinformationen, die andere Pixelblöcke betreffen, die kein Kantenerfassungssignal enthalten.

# FIG. 1

EP 1 067 801 B1

# FIG. 2

# FIG. 3

```
        ┌──────────────────┐
        │  EDGE DETECTING  │
        └──────────────────┘
                 │
    ┌────────────▼───────────────┐
    │  ┌──────────────────────┐  │
    │  │ EXTRACT MACRO BLOCK  │──S1
    │  └──────────────────────┘  │
    │            │               │
    │      ┌──────────┐          │
    │      │   SCAN   │──S2       │
    │      └──────────┘          │
    │            │               │
    │        ╱────────╲   S3      │
    │       ╱  EDGE?   ╲─────No──────┐
    │       ╲          ╱             │
    │        ╲────────╱              │
    │            │Yes                │  S5
    │     ┌────────────┐      ┌─────────────┐
    │     │  SET FLAG  │──S4   │ SET NO FLAG │
    │     └────────────┘      └─────────────┘
    │            │                   │
    │     ┌────────────┐             │
    │     │ STORE FLAG │──S6 ◄────────┘
    │     └────────────┘
    │            │           S7
    │        ╱────────────╲
    └──No──╱ ALL MACRO      ╲
           ╲ BLOCKS FINISHED?╱
            ╲───────────────╱
                 │Yes
    ┌────────────▼───────────┐
    │    ┌──────────────┐     │
    │    │ EXTRACT FLAG │──S8  │
    │    └──────────────┘     │
    │            │            │
    │  ┌────────────────────┐ │
    │  │ DETECT SURROUNDINGS│──S9
    │  └────────────────────┘ │
    │            │            │
    │       ╱──────────╲  S10  │
    │      ╱ ALL SURROUND╲─────No───┐
    │      ╲ INGS FLAG SET?╱        │
    │       ╲────────────╱          │
    │            │Yes               │
    │     ┌────────────┐            │
    │     │ CLEAR FLAG │──S11        │
    │     └────────────┘            │
    │            │                  │
    │     ┌────────────┐ ◄──────────┘
    │     │  TRANSMIT  │──S12
    │     └────────────┘
    │            │          S13
    │        ╱──────────╲
    └──No──╱ ALL FLAGS   ╲
           ╲  FINISHED?  ╱
            ╲───────────╱
                 │Yes
            ┌─────────┐
            │   END   │
            └─────────┘
```

# FIG. 4

# FIG. 5

☐ : 1ST FIELD IMAGE

▨ : 2ND FIELD IMAGE

# FIG. 6

# FIG. 7

# FIG. 8